# EUROPÄISCHE PATENTANMELDUNG

(11) **EP 1 367 094 A2**
(43) Veröffentlichungstag der Anmeldung: **03.12.2003**
(21) Anmeldenummer: 03011108.2
(22) Anmeldetag: 22.05.2003
(51) Int. Cl.: C08L 23/10, C08L 53/00, C08L 23/08, C08K 3/22, H01B 3/44

(54) **Recyclebare halogenfrei flammgeschützte Kunststoffmischung und Kabel mit einer aus einer solchen Mischung bestehenden Isolation**

(30) Priorität: 29.05.2002 DE 20208542 U; 23.01.2003 DE 20301100 U
(71) Anmelder: Coroplast Fritz Müller GmbH & Co. KG, 42279 Wuppertal (DE)
(72) Erfinder: Haese, Holger, 42277 Wuppertal (DE); Zappe, Frank Dipl.-Ing., 44575 Castrop-Rauxel (DE); Wichmann, Helmut Dipl.-Ing., 48249 Dülmen (DE)
(74) Vertreter: Patentanwälte Dr. Solf & Zapf

(57) **Zusammenfassung**

Die Erfindung betrifft eine recycelbare halogenfrei flammgeschützte Kunststoffmischung, insbesondere für elektrische oder optische Kabel, auf der Basis von Polypropylen und/oder dessen Copolymeren (A), welche einen flammwidrig wirkenden Füllstoff (C) und eine mindestens auf einem Olefin-Copolymer basierende thermoelastische Komponente (B) enthält. Um zu erreichen, dass die Mischung mindestens der Gebrauchstemperaturklasse von 125 °C zugeordnet werden kann und sich dabei durch eine hohe Abriebfestigkeit, Medienbeständigkeit und Kälteflexibilität auszeichnet, wird folgende Zusammensetzung der Mischung vorgeschlagen:
50 - 95 phr des Polypropylenpolymers oder -copolymers (A),
5 - 50 phr der thermoelastischen Komponente (B),
90 - 250 phr des Füllstoffs (C)
0,1 - 5 phr eines Stabilisatorsystems (D),
0,5 - 5 phr Verarbeitungsadditive (E),
wobei die thermoelastische Komponente als Comonomer(e) des Olefins Octen und/oder mindestens ein Alkylacrylat enthält. Es werden auch verschiedene Ausführungsformen von elektrischen oder optischen Kabeln beschrieben, die einen elektrischen oder optischen Leiter umfassen und zumindest teilweise aus der genannten Kunststoffmischung bestehen.

## Beschreibung

Die vorliegende Erfindung betrifft eine recycelbare halogenfrei flammgeschützte Kunststoffmischung, insbesondere für elektrische oder optische Kabel, auf der Basis von Polypropylen und/oder dessen Copolymeren, welche einen flammwidrig wirkenden Füllstoff und eine mindestens auf einem Olefin-Copolymer basierende thermoelastische Komponente enthält.

Des weiteren betrifft die vorliegende Erfindung ein elektrisches oder optisches Kabel, das einen elektrischen oder optischen Leiter und eine Isolierung umfaßt, wobei letztere aus einer recycelbaren halogenfrei flammgeschützten Kunststoffmischung, insbesondere aus einer Kunststoffmischung der vorstehend genannten Art, besteht, welche auf der Basis von Polyolefinen, insbesondere von Polypropylen, und/oder deren/dessen Copolymeren hergestellt ist und einen flammwidrig wirkenden Füllstoff enthält.

Die Einsatzbereiche solcher Mischungen bzw. Kabel finden sich unter anderem im Automobilbau. Üblicherweise werden dabei als halogenfrei flammgeschützte Kunststoffmischungen vernetzte Werkstoffe eingesetzt, wie dies beispielsweise in der WO 02/08331 A2 beschrieben ist. Derartige Kunststoffmischungen sind jedoch aufgrund ihrer Vernetzung nachteiligerweise nicht mehr wiederverwendbar, da sie weder schmelzbar noch löslich sind. Sie können zur Entsorgung nur noch thermisch verwertet, d.h. verbrannt, werden.

An Kunststoffmischungen der eingangs beschriebenen Art werden unter anderem auch Forderungen hinsichtlich ihrer thermischen Belastbarkeit gestellt. So müssen diese Mischungen beispielsweise Langzeit-Temperaturbelastungen bei hohen und tiefen Temperaturen schadensfrei überstehen können. Während halogenhaltige Kunststoffmischungen, wie PVC, die für eine Langzeit-Temperaturbelastung von 90 °C konzipiert sind, durch Mischungen auf der Basis von weichem (unvemetztem) Polyethylen noch relativ problemlos substituiert werden können, ist dies bei höher konzipierten thermischen Belastungen nicht mehr gegeben. Ja sogar für PVC-Kabelisolierungen selbst sind schon Gebrauchstemperaturklassen von 125 °C und 150 °C nicht mehr realisierbar. Für diese Fälle kommen daher bekanntermaßen z.B. Kunststoffmischungen zum Einsatz, die auf der Basis von vernetztem Polyethylen oder von Polypropylen und/oder dessen Copolymeren hergestellt sind.

So ist in der DE 196 32 153 A1 die Verwendung einer Kunststoffmischung der eingangs beschriebenen Art für elektrische Kabel beschrieben. Bei dieser bekannten Mischung handelt es sich um ein PP-basierendes unvemetztes Produkt, welches Ethylen-Vinylacetat als weitere Komponente enthält. Die unvernetzte EVA-Komponente ist jedoch stark lösemittelempfindlich. Daher ist der Einsatz der bekannten Mischung in Bereichen, in denen mit einem Kontakt mit organischen oder anorganischen Lösemitteln, wie z.B. Kraftstoffen, Mineralölen oder ätzend wirkenden Substanzen, wie Batteriesäure, gerechnet werden muß, problematisch - einerseits im Hinblick auf die Lebensdauer von Kabeln, in deren Isolation die Kunststoffmischung verwendet wird, und andererseits (in der Folge dessen) auch im Hinblick auf die Systemsicherheit einer gesamten elektrischen Anlage, die mit diesen Kabeln ausgestattet ist.

Insbesondere für im Automobilbau einzusetzende Kabel besteht ein anspruchsvolles Anforderungs- bzw. Belastungsprofil. Zum Nachweis der Erfüllung der bestehenden Anforderungen durch einen Werkstoff sind dabei verschiedene Prüfungen und Tests vorgeschrieben, die in einer (unter verschiedenen Pkw-Herstellem abgestimmten) Werksnorm zusammengefaßt sind, die sich auf einadrige, ungeschirmte Niederspannungsleitungen für einen Nennspannungsbereich bis zu 60 V bezieht.

Im Einzelnen sind entsprechend dieser Werksnorm unter anderem folgende - Forderungen zu erfüllen:
Der Isolationswerkstoff muß den Anforderungen der VDA 231-106 entsprechen.

Die minimale und maximale Dauergebrauchstemperatur (Tu und To) für eine Beanspruchungsdauer von 3 000 h liegen entsprechend der erwähnten Temperaturklasse bei - 40 °C und bei 125 °C, wobei das Material einer Kurzzeittemperatur (240 Stunden) von 150 ± 3 °C und einer Überlasttemperatur (6 Stunden) von 175 ± 3 °C standhalten muß.

Unter Berücksichtigung ihrer Dauergebrauchstemperatur werden in Abhängigkeit des jeweilig - u.a. im Automobil für Fahrzeugleitungen - geforderten Einsatztemperaturbereiches heute bekanntermaßen hauptsächlich folgende handelsübliche Isolationsstoffe eingesetzt:
- Temperaturklasse A (- 40 °C bis 85 °C) PVC, PE;
- Temperaturklasse B (- 40 °C bis 105 °C), PVC, PA, PP;
- Temperaturklasse C (- 40 °C bis 125 °C), PVC, VPE (Polyethylen, vernetzt), PUR, TPE (thermoplastisches Elastomer);
- Temperaturklasse D (- 40 °C bis 150 °C) ETFE (Ethylentetrafluorethylen), TPE, Polyesterelastomer;
- Temperaturklasse E (- 40 °C bis 175 °C) FEP (Tetrafluorethylenperfluorpropylen), SIR (Silikonkautschuk);
- Temperaturklasse F (- 40 °C bis 200 °C), FEP (Tetrafluorethylenperfluorpropylen), SIR (Silikonkautschuk);
- Temperaturklasse G (- 40 °C bis 225 °C), PFA Perfluoralkoxypolymer;
- Temperaturklasse H (- 40 °C bis 250 °C), PFA Perfluoralkoxypolymer.

Einige dieser Isolationsstoffe sind halogenhaltig, andere erfüllen weitere, nachfolgend dargestellte Forderungen der Werksnorm an die mechanischen, Verschleißund korrosiven Eigenschaften der Isolationsstoffe nicht.

Was diese Norm betrifft, so erfolgt für die Bestimmung der Dichte eine Prüfung nach ISO 1183-3 und für die Bestimmung der Zugfestigkeit und Reißdehnung eine Prüfung nach DIN EN 60 811-1-1.

Generell muß die Leitung so aufgebaut sein, dass sie sich einwandfrei verarbeiten läßt und auf handelsüblichen Geräten schweißbar ist.

Hinsichtlich der Abriebfestigkeit der Isolierung bestehen folgende Anforderungen: Die Abriebfestigkeit durch Schaben ist definiert durch die Anzahl der vollständigen Zyklen, die notwendig sind, bis die schabende Nadel die Isolierung durchgerieben und durch den elektrischen Kontakt die Maschine abgestellt hat. Die erforderliche Mindestzyklenzahl ist von jedem einzelnen Prüfling zu erfüllen und in der nachstehenden Tabelle 1 angegeben. Aufbau und Durchführung der Prüfung erfolgen dabei nach DIN ISO 6722-1 (Abschnitt Abriebfestigkeit), Nadeldurchmesser (0,45 ± 0,01) mm. Der Versuch kann beendet werden, sobald die Zyklenzahl die Mindestzyklenzahl um 50 % überschreitet. Es ist darauf zu achten, daß die Nadel am Umkehrpunkt abgehoben wird.

**Tabelle 1:**

| Anforderungen des Abriebtests | | | | | | | | | | |
|---|---|---|---|---|---|---|---|---|---|---|
| Leiternennquerschnitt querschnitt | mm² mm | 0,22 0,22 | 0,35 0,35 | 0,5 0,5 | 0,75 0,75 | 1,0 1,0 | 1,5 1,5 | 2,5 2,5 | 4,0 4,0 | 6,0 6,0 |
| Auflagekraft | N | 7,00 ± 0,05 | | | | | | | | |
| Zyklen | min. | 150 | 200 | 300 | 350 | 500 | 1500 | 1500 | 1500 | 1500 |

Bei der Prüfung der Flammwidrigkeit besteht die Forderung, daß die Flamme der brennenden Isolierung nach Wegnahme einer Brennerflamme innerhalb von 30 s erlöschen muß. Mindestens 50 mm der Isolierung müssen am oberen Ende unverbrannt bleiben. Die Prüfung erfolgt an Proben einer Länge von 500 ± 5 mm. Die Prüfungsdurchführung erfolgt nach DIN ISO 6722-1 (Abschnitt Flammwidrigkeit). Für die Prüfung wird ein Bunsenbrenner mit einem Brennrohr von etwa 9 mm Innendurchmesser und einer etwa 100 mm hohen Flamme verwendet. Die Länge des inneren blauen Kegel der Flamme muß etwa 50 mm betragen und dessen Temperatur 950 ± 50 °C. Die Probe wird in zugluftfreier Umgebung aufgehängt und der Spitze des inneren Kegels der Prüfflamme ausgesetzt. Die Flamme wird für max. 30 s aufgebracht, oder bis der Leiter sichtbar wird. Zur Bestimmung des Alterungsverhaltens wird zwischen einer Kurzzeitalterung (240 h) und einer Langzeitalterung (3000 h) unterschieden. Anforderungen und Prüfungsbedingungen ergeben sich für beide Tests aus der DIN ISO 6722-1 und -2. Nach der Kurzzeitalterung wird eine Wickelprüfung bei -25 °C) und nach der Langzeitalterung eine Wickelprüfung bei Raumtemperatur durchgeführt. Außerdem erfolgt eine Wickelprüfung bei niedriger Temperatur (-40 °C) ebenfalls nach DIN ISO 6722-1 und -2.

Zur Prüfung der hydrolytischen Beständigkeit wird ein Prüfling ausreichender Länge in der Mitte in zehn Windungen auf einen Dorn mit einem standardmäßig festgelegten Durchmesser gewickelt. Die Leitung wird abgebunden und der Dorn entfernt. Danach wird der Prüfling an den Pluspol einer 48 V-Gleichspannungsquelle angeschlossen und 40 Tage in Salzlösung (1% NaCI) der Temperatur (80 ± 2) °C gelagert, so daß ca. 2 m des Prüflings vollständig eingetaucht sind. Die Elektrodenoberfläche soll dabei eine Größe von 100 ± 10 cm2 aufweisen (Material Cu). Der längenbezogene Widerstand darf nach der Prüfung nicht unter 90 % des Ausgangswertes sinken, und der Isolationswiderstand darf während der Wasserlagerung nicht unter 10¹⁰ cm fallen. Unmittelbar nach der Wasserlagerung werden alle Proben auf Vorliegen einer vorgeschriebenen Spannungsfestigkeit (DIN ISO 6722-1) geprüft.

Für die Prüfung der Medienbeständigkeit werden die verwendeten Medien entsprechend einer normierten Liste in zwei Prüfgruppen eingeteilt, für die jeweils unterschiedliche Anforderungen bestehen. Medien der Gruppe 1 sind Mehrbereichs-Motorenöle, CVT / ECVT Automatikgetriebeöle, Kühlerfrostschutzmittel, verschiedene Reiniger, Motorraumversiegelungsmassen, Kraftstoffe u.a.. Zu den Medien der Gruppe 2 gehören u.a. Batteriesäure, Bremsflüssigkeiten und Lenkgetriebeöle, Für die Prüfung darf die Isolierung keine Risse, Brüche oder andere funktionsrelevanten Beschädigungen aufweisen. Bei der anschließenden Spannungsprüfung darf kein Durchschlag erfolgen. Gegenüber Medien der Gruppe 1 ist eine Beständigkeit von mindestens 1 000 h erforderlich. Bei Medien der Gruppe 2 wird eine Mindestbeständigkeit von 240 h gefordert. Unterschreitet die Beständigkeit 1000 h, muß bei Einsatz der Leitung ein entsprechender Schutz vor den jeweiligen Medien der Gruppe 2 im betroffenen Kabelsatzbereich vorgesehen werden (z. B. durch Wellrohr, Schutzschlauch). Im Detail erfolgt die Prüfung folgendermaßen: Zwei Leitungen gleichen Materials mit je einem Querschnitt von 0,35 mm² werden miteinander verdrillt (Schlaglänge ca. 2 cm) und 40 cm lange Proben abgeschnitten. Es sind drei Prüfgruppen vorzubereiten, wobei für die Prüfgruppe 1 die Proben in der Mitte U-förmig gebogen werden, so daß sie jeweils in ein offenes Reagenzglas mit einem Durchmesser von ca. 25 mm passen. Die Prüflinge werden dann mit 50 % Überlappung mit einem normiert auszuwählenden Wickelband einer ersten Gruppe umwickelt, wobei darauf zu achten ist, daß die Dauergebrauchstemperatur des Wickelbandes mindestens der Dauergebrauchstemperatur der Leitung entspricht. Bei der Prüfgruppe 2 wird wie bei der Prüfgruppe 1 verfahren - jedoch unter Verwendung anderer Wickelbänder. In der Prüfgruppe 3 werden die Prüflinge ohne Wickelband getestet. Je mindestens vier Prüflinge jeder Prüfgruppe werden 2 Minuten bei Raumtemperatur in das jeweilige Medium getaucht, wobei die Leitungsenden nicht mit Medium in Kontakt gelangen dürfen. Anschließend müssen die Prüflinge 2 Minuten (10 Minuten bei Kraftstoffen) abtropfen. Danach wird jeweils 1 Prüfling mit den Kabelenden nach oben in ein Reagenzglas eingelegt, und die Reagenzgläser werden bei der oben erwähnten Temperatur TO 1 000 h in einen Wärmeschrank eingelagert. Nach 240 h, 480 h, 720 h und 1000 h wird jeweils einer der Prüflinge entnommen und die verbleibenden Prüflinge werden nochmals in das jeweilige Medium getaucht und nach einem Abtropfen wieder einlagert. Der entnommene Prüfling wird aufgedrillt und einer Sichtprüfung unterzogen. Anschließend wird die Leitung um einen Dorn mit einem Durchmesser von 2 mm gewickelt, wiederum eine Sichtprüfung und außerdem (wie oben beschrieben) eine Prüfung der Spannungsfestigkeit durchgeführt.

Der vorliegenden Erfindung liegt das Problem zugrunde, eine unvemetzte recycelbare halogenfrei flammgeschützte Kunststoffmischung, der eingangs genannten Art zu schaffen, die mindestens der Gebrauchstemperaturklasse von 125 °C zugeordnet werden kann und die sich durch eine hohe Abriebfestigkeit, Medienbeständigkeit und Kälteflexibilität auszeichnet.

Dieses Problem umfaßt dabei auch die Aufgabe, ein elektrisches oder optisches Kabel, der eingangs genannten Art zu schaffen, dessen Isolierung aus einer recycelbaren halogenfrei flammgeschützten polyolefinischen Kunststoffmischung, insbesondere einer Kunststoffmischung der eingangs genannten Art, besteht und in optimierter Weise an die erforderlichen Anforderungen bezüglich Temperaturbeständigkeit, Kälteflexibilität, Recycelbarkeit, Medienbeständigkeit und Abriebfestigkeit angepaßt ist.

Das der Erfindung zugrundeliegende Problem wird mit einer Kunststoffmischung der eingangs genannten Art gelöst, die durch folgende Zusammensetzung gekennzeichnet ist:

| | |
|---|---|
| 50 - 95 phr | des Polypropylenpolymers oder -copolymers, |
| 5 - 50 phr | der thermoelastischen Komponente, |
| 90 - 250 phr | des Füllstoffs |
| 0,1 - 5 phr | eines Stabilisatorsystems, |
| 0,5 - 5 phr | Verarbeitungsadditive, |

wobei die thermoelastische Komponente als Comonomer(e) des Olefins Octen und/oder mindestens ein Alkylacrylat enthält.

Die Einheit "phr" ("parts per hundred rubber") steht dabei für die Massenanteile, welche auf die Gesamtmenge des Kunststoffs bezogen sind, also auf die Summe der Massen des Polypropylenpolymers oder -Copolymers und der thermoelastischen Komponente.

Es wurde überraschenderweise gefunden, daß dadurch, daß die thermoelastische Komponente als Comonomer(e) des Olefins Octen und/oder ein Alkylacrylat, insbesondere Ethyl-, Methyl- oder Butylacrylat, enthält, der Kunststoffmischung eine ausgesprochen hohe Aufnahmefähigkeit für den Füllstoff erhält (> 170 phr), was einerseits die Einstellung einer hohen Flammwidrigkeit ermöglicht, andererseits jedoch nicht zu einer Verschlechterung der mechanischen Eigenschaften, wie insbesondere der Abriebfestigkeit und der Reißdehnung, führt.

Besondere Vorteile hinsichtlich des Eigenschaftsbildes der erfindungsgemäßen Kunststoffmischung ergeben sich dabei zusätzlich durch folgende Merkmale des Polypropylenpolymers oder -copolymers:
- es weist eine Dichte von mehr als 0,8 g/cm³ auf,
- es weist eine Kerbschlagzähigkeit nach ISO 179 / 1eA von mehr als 4 kJ/m² bei 0°C auf,
- es weist einen Schmelzpunkt nach ISO 3146 von über 160°C auf,
- es ist ein Block-Copolymer,
- es ist ein heterophasiges Polymer.

Letzteres bedeutet, daß in der Polymermatrix amorphe bzw. sphärische Bereiche und teilkristalline Bereiche zu finden sind, wobei typischerweise ein solches Material aus drei Komponenten bestehen kann: einem PP-Homopolymer, einem gummiartigen Ethylen-Propylen-Bipolymer und einem vorwiegend kristallinen ethylenreichen Ethylen-Propylen-Bipolymer. Durch die heterophasige Struktur kann die Schlagzähigkeit des Materials in positiver Weise beeinflußt werden ("Impact modifying"). Einzelheiten zu verschiedenen möglichen Herstellungsmethoden von heterophasigen PP-Copolymeren sind in der WO 02/20628 A1 beschrieben. Wie dabei zusätzlich durch Einstellung einer gewünschten molaren Masse und deren Verteilung, insbesondere einer breiten Molmassenverteilung, sowie der Taktizität der Monomerbestandteile, sowie des Anteils, der Verteilung und der Schmelzindizes der unterschiedlichen Phasen eine weitere Eigenschaftsmodifikation erfolgen kann, ist dem Fachmann grundsätzlich bekannt.

In bevorzugter Ausbildung kann es sich bei dem Füllstoff, der insbesondere ein Metallhydroxyd sein kann, um ein Magnesiumhydroxyd handeln, welches eine mittlere Teilchengröße (d₅₀) von 0,9 - 2,1 µm, insbesondere von 1,2 - 1, 7 µm, eine BET-Oberfläche von mehr als 3 m²/g, insbesondere von 4 - 6 m²/g, und/oder eine elektrische Leitfähigkeit von weniger als 155 µS/cm aufweist. Dieser Füllstoff kann sowohl ungecoatet als auch mit einer Beschichtung (vorzugsweise mit Amino- oder Vinylsilanen) eingesetzt werden. Durch diese Füllstoffeigenschaften kann die gewünschte Flammwidrigkeit eingestellt werden, wobei gleichzeitig eine ausgezeichnete Verarbeitbarkeit, Benetzung der Füllstoffteilchen durch die Kunststoffkomponente und daher feindisperse, homogen verteilte und hochadhäsive Einbindung der Füllstoffteilchen erzielt wird. Wie bereits erwähnt, kann der Füllstoff kann mit Vorteil in hoher Dosierung, also beispielsweise in einer Menge von 170 - 220 phr, in der Kunststoffmischung enthalten ist.

Das eingesetzte Stabilisatorsystem kann vorzugsweise auf einer synergistisch reagierenden Mischung von Thiocarbonsäureestem mit einem sterisch gehinderten Phenol und Hydrazid-Metalldesaktivatoren, insbesondere in einem Verhältnis von 1 : (1,2 - 1,8) : (0,8 -1,2), basieren.

Die Verarbeitungsadditive können mit Vorteil aus Zusätzen bestehen, welche die Extrudierbarkeit erleichtem und vorzugsweise Wachse und/oder andere organische Verbindungen auf der Basis von Amiden, Estern oder Olefinen umfassen.

Die erfindungsgemäße Kunststoffmischung kann auch, z.B. zu Kennzeichnungszwecken bei Verwendung für eine Kabelisolierung, einen oder mehrere Farbstoffe als Rezepturbestandteile enthalten.

Bei einem erfindungsgemäßes Kabel besteht die Isolierung aus einer Kunststoffmischung mit dem erfindungsgemäßen Rezepturaufbau.

Die oben genannte, der Erfindung zugrundeliegende Teilaufgabe, welche die Schaffung eines in optimierter Weise an die erforderlichen Anforderungen angepaßten elektrischen oder optischen Kabels betrifft, wird dadurch gelöst, daß die Zusammensetzung der Rezeptur der Kunststoffmischung auf ausgewählte physikalische und/oder geometrische Eigenschaften des Leiters abgestimmt ist. Insbesondere kann der Anteil des flammwidrig wirkenden Füllstoffs in Abhängigkeit vom Leiterquerschnitt eingestellt sein. Zusätzlich oder alternativ kann erfindungsgemäß auch der Anteil der Komponente, die ein oder mehrere Thermoelaste umfaßt, in Abhängigkeit vom Querschnitt des Leiters eingestellt sein. Durch die erfindungsgemäße Abstimmung der Zusammensetzung der Kabelisolierung auf den Leiter wird in vorteilhafter Weise der Tatsache Rechnung getragen, daß z.B. sowohl die thermische Belastbarkeit eines Kabels als auch dessen mechanische Eigenschaften, wie die Flexibilität, nicht allein durch die Isolierung bestimmt werden, sondem auch durch die Eigenschaften des Leiters, wie z.B. dessen Geometrie, thermische Leitfähigkeit, Flexibilität oder die Charakteristika des Spannungs-Dehnungs-Diagramms.

Prinzipiell besteht auch die Möglichkeit, daß die Isolierung eines Kabels der erfindungsgemäßen Art aus zwei oder mehr Schichten gefertigt ist, wobei bei einer sogenannten Dualschichtisolation in der Außenschicht die erfindungsgemäße, gegebenenfalls vom Leiterquerschnitt abhängige, Rezeptur verwendet wird. Für die Innenschicht der Isolierung kann dann (gefährdungsfrei für den Wert der Flammbeständigkeit) eine Rezeptur mit reduziertem Flammhemmeranteil eingesetzt werden. Der Vorteil kann dabei in einer Kostenerspamis für den Aufwand an Flammschutzmittel bestehen - und insbesondere in einer Kosteneinsparung auch dadurch, daß die Innenschicht keiner Einfärbung bedarf. Die Schichtdicke der Außenschicht sollte in einem solchen Fall mindestens die Hälfte der Dicke der gesamten Isolierung ausmachen.

Bei einer Dualschichtisolation kann auch zur Bildung der Innenschicht die erfindungsgemäße, gegebenenfalls vom Leiterquerschnitt abhängige, Rezeptur eingesetzt werden. Für die Außenschicht der Isolierung kann dann ein an sich bekannter Isolationswerkstoff, bevorzugt ein flammwidriger und halogenfreier Kunststoff, wie ein thermoplastisches Elastomer und/oder PUR-Werkstoff, eingesetzt werden. Auch durch eine solche Kombination kann der Fertigungs- bzw. Materialaufwand in Bezug auf das angestrebte Eigenschaftsbild optimiert werden.

Weitere vorteilhafte Ausführungen der Erfindung sind in den Unteransprüchen und der nachfolgenden speziellen Beschreibung enthalten.

Anhand mehrerer durch die beiliegende Zeichnung ergänzten und näher dargestellten Ausführungsbeispiele wird die Erfindung näher erläutert. Dabei zeigen:
- Fig. 1: den prinzipiellen Aufbau eines erfindungsgemäßen elektrischen oder optischen Kabels,
- Fig. 2 bis 4: chemische Strukturformeln von vorzugsweise in der erfindungsgemäßen Kunststoffmischung verwendbaren Verbindungen des Stabilisatorsystems,
- Fig. 5: ein erfindungsgemäßes Kabel mit zweischichtigem Aufbau seiner Isolierung.

In den verschiedenen Figuren der Zeichnung sind gleiche Teile stets auch mit den gleichen Bezugszeichen versehen, so daß sie in der Regel auch jeweils nur einmal beschrieben werden.

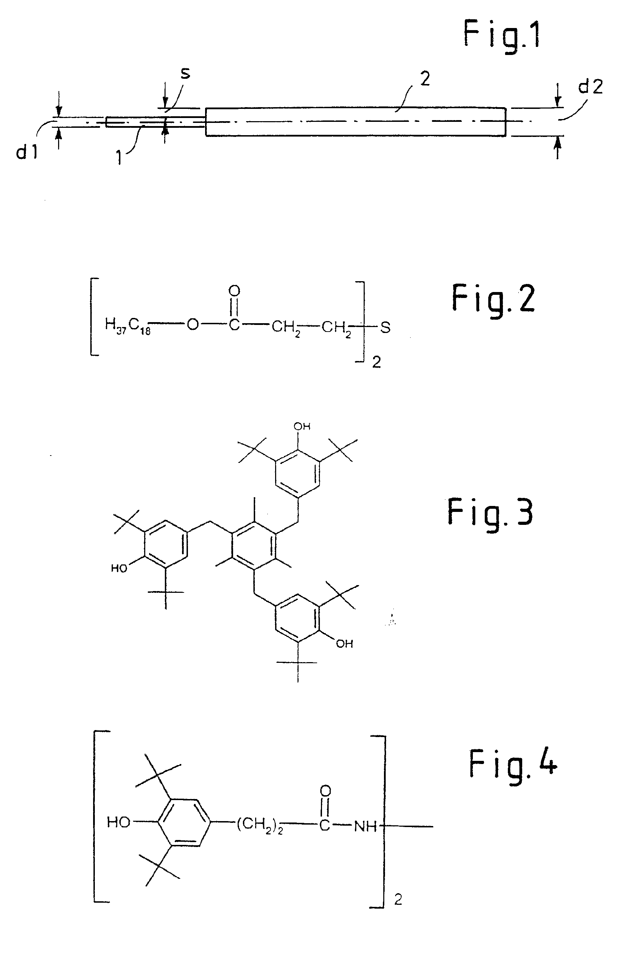

Wie zunächst aus Fig. 1 hervorgeht, umfaßt ein erfindungsgemäßes elektrisches oder optisches Kabel einen elektrischen oder optischen Leiter 1 und eine Isolierung 2, die aus einer recycelbaren halogenfrei flammgeschützten Kunststoffmischung besteht. Diese Kunststoffmischung ist auf der Basis von Polyolefinen, insbesondere von Polypropylen, und/oder deren/dessen Copolymeren hergestellt und enthält einen flammwidrig wirkenden Füllstoff.

Erfindungsgemäß ist die Zusammensetzung der Rezeptur der Kunststoffmischung der Isolierung - wie im weiteren beispielhaft noch genauer erläutert wird - auf ausgewählte physikalische und/oder geometrische Eigenschaften des Leiters 1 abgestimmt. Insbesondere ist der Anteil des flammwidrig wirkenden Füllstoffs und/oder der Anteil einer in der Kunststoffmischung enthaltenen Komponente, die ein oder mehrere Thermoelaste umfaßt, ist in Abhängigkeit von dem durch den Durchmesser d1 des Leiters 1 bestimmten Querschnitt des Leiters 1 eingestellt.

Das Bezugszeichen d2 bezeichnet dabei den Durchmesser des Kabels, wobei sich die Wandstärke s der Isolierung 2 als halber Wert der Durchmesserdifferenz d2-d1 ergibt. Die möglichen Werte, welche d1, d2 und s für verschiedene Nennquerschnitte des Leiters 1 annehmen dürfen, können durch Normen, wie beispielsweise den eingangs erwähnten Werkstandard (LV 112 - Niederspannungsleitungen für Kraftfahrzeuge, Fassung vom 18.03. 2002), festgelegt sein. Bei dem Leiter 1 selbst kann es sich bevorzugt um einen blanken Einzeldraht E-Cu 58 F21 nach DIN 40 500-4 handeln, wobei dieser beispielsweise auch andere als die normgemäß vorgesehenen Oberflächen (z. B. verzinnt, versilbert) aufweisen kann.

Die nachfolgenden Beispiele für die erfindungsgemäße Kunststoffmischung beziehen sich auf den gesamten Bereich der genannten Zusammensetzung, wobei nachfolgend die einzelnen Komponenten mit den in Klammern angegebenen Buchstaben bezeichnet werden: 50 - 95 phr Polypropylenpolymer oder -copolymer (A), 5 - 50 phr thermoelastische Komponente (B), 90 - 250 phr Füllstoff (C), 0,1 - 5 phr Stabilisatorsystem (D), 0,5 - 5 phr Verarbeitungsadditive (E).

Im Einzelnen wurden die in der nachstehenden Tabelle 2 aufgeführten Mischungen (Einheit: phr) hergestellt, die den ebenfalls in der Tabelle 2 angegebenen, mit AL bezeichneten Leiternennquerschnitten (Einheit: mm²) zugeordnet sind. Bei den Mischungen handelt es sich um Grundrezepturen, die dann in der noch nachfolgend beschriebenen Weise weiter modifiziert wurden.

**Tabelle 2:**

| Rezepturen | | | | | |
|---|---|---|---|---|---|
| AL | 0,35 | 0,5 | 1,5 | 3,0 | ≥6,0 |
| A | 95 | 92,5 | 85 | 75 | 50 |
| B | 5 | 7,5 | 15 | 25 | 50 |
| C | 192 | 185 | 170 | 140 | 90 |
| D | 3 | 3 | 3 | 3 | 3 |

Der Anteil des flammwidrig wirkenden Füllstoffs (C) ist also bei einem größeren Querschnitt AL des Leiters 1 geringer als bei einem kleineren Querschnitt AL des Leiters 1. Er ist zwischen einem nicht zu überschreitenden Maximalwert und einem nicht zu unterschreitenden Minimalwert in erster Näherung reziprok proportional zum Querschnitt AL des Leiters 1 eingestellt, wobei auch standardmäßig zugelassene Dickenvariationen der Wandstärke s der Isolierung 2 bei verschiedenen Nennquerschnitten des Leiters 1 berücksichtigt wurden. Unter Beachtung dessen könnte (in Prozent umgerechnet) der Anteil des flammwidrig wirkenden Füllstoffs (Komponente C) mit Vorteil bei einem Leiterquerschnitt AL von 0,35 mm² etwa 63 - 67 Prozent und bei einem Querschnitt AL des Leiters 1 von 6,0 mm² etwa 44 - 49 Prozent der gesamten Mischung beträgt.

Für den Anteil der Komponente B, die ein oder mehrere Thermoelaste umfaßt, liegt (in Umkehrung zu den Verhältnissen für die Komponente C) bezogen auf den Querschnitt AL des Leiters 1 eine positive, aber näherungsweise ebenfalls lineare, Regression vor, wobei der Anteil der Komponente B mit Vorteil bei einem Leiterquerschnitt AL von 0,35 mm² etwa 1,4 - 2,0 Prozent und bei einem Querschnitt AL des Leiters 1 von 6,0 mm² etwa 24 - 28 Prozent der gesamten Mischung beträgt.

Als Komponente A kam jeweils ein heterophasisches PP-Block-Copolymer mit einer Dichte von 0,899 g/cm³, einer Kerbschlagzähigkeit (Charpy) nach ISO 179 / 1eA von 32 kJ/m² bei 23 °C, von 5,5 kJ/m² bei 0 °C und von 2,8 kJ/m² bei -30 °C, einer Shore-D-Härte nach ISO 868 (3-s-Wert) von 66, einer Zugfestigkeit nach ISO 527-2 (v= 50 mm/min) von 25 MPa, einer Reißdehnung nach ISO 527-2 (v= 50 mm/min) von 10 %, einem Schmelzpunkt (DSC) nach ISO 3146 von 165 °C, Vicat-Erweichungstemperaturen nach ISO 306 von 46 °C (VST/A50 - 10 N) und 70 °C (VST/B50 - 50 N), sowie einem Schmelzindex von 1 g / 10 min / 2.16 kg / 230°C nach ISO 1133 zur Anwendung.

Als Komponente B wurde zunächst ein Ethylen-Octen-Coplymer mit einer Dichte von 0,882 g/cm³ eingesetzt. Der Kerbschlagzähigkeits-Test (lzod) nach ASTM D256 sowohl bei 23 °C als auch bei -30 °C führte nicht zum Bruch der Probe. Das Material wies des weiteren eine Shore-A-Härte nach ISO 868 von 85, eine Zugfestigkeit nach ISO 527-2 (v= 500 mm/min) von 21 MPa, eine Reißdehnung nach ISO 527-2 (v= 500 mm/min) von 2100 %, einem Schmelzpunkt (DSC) nach ASTM D3418 von 70 °C, eine Vicat-Erweichungstemperatur nach ASTM D1525 von 47 °C (10 N), sowie einem Schmelzindex von 3 g /10 min / 2.16 kg / 190°C nach ISO 1133/ASTM 1238 auf.

Der Füllstoff (Komponente C) bestand aus hochreinem Magnesiumhydroxid (> 99,8 %) mit hoher Schüttdichte und einem gleichmäßigen Kristallaufbau, das einer speziellen Oberflächenbehandlung (mit Amino- bzw. Vinylsilanen) unterzogen worden war. Die BET-Oberfläche lag zwischen 4 und 6 m²/g. Der Maximalwert der elektrischen Leitfähigkeit lag bei 150 µS/cm. Die granulometrische Zusammensetzung wies folgende Charakteristika auf: mittlere Teilchengröße (d₅₀) 1,25 -1,65, d₁₀ = 0,40 - 0,70, d₉₀ = 2,10 - 4,10 (gemessen nach einem Laserbeugungsverfahren mit dem Malverin Mastersizer S).

Das eingesetzte Stabilisatorsystem (Komponente D) bestand aus einer synergistisch wirkenden Mischung aus einem Thiocarbonsäureester: Dioctadecyl 3, 3' - thiodipropionat (chemische Strukturformel - siehe Fig. 1, CAS-Nummer: 693-36-7) als einem Langzeit-Wärmebeständigkeits-Stabilisator, einem sterisch gehinderten Phenol: 3, 3', 3', 5, 5', 5' - Hexa-tert-butyl- a, a', a' - (mesitylen - 2, 4, 6 - triyl) tri-p-Kresol (chemische Strukturformel - siehe Fig. 2, CAS-Nummer: 1709-70-2) als einem Oxydationshemmer und einem Hydrazid-Metalldesaktivator: 2', 3 - Bis[[3-[3, 5-di-tert-butyl-4-hydroxyphenyl]propionyl]]propionohydrazid (chemische Strukturformel - siehe Fig. 3, CAS-Nummer: 32687-78-8) im Verhältnis 1:1,5:1.

Zusätzlich zu den in der Tabelle 2 angegebenen Komponenten kamen als weitere Komponente E zur Erleichterung der Extrudierbarkeit Verarbeitungsadditive in einer Menge von 2 phr zum Einsatz, die aus Wachsen bzw. anderen organischen Verbindungen auf der Basis von Amiden, Estern oder Olefinen bestanden.

Die erfindungsgemäßen Kabel - bzw. je nach den vorgeschriebenen Prüfungsbedingungen ausschließlich deren Isolation 2, die aus der unvernetzten erfindungsgemäßen Kunststoffmischung bestand, entsprachen bei der Materialprüfung sämtlichen Anforderungen der oben aufgeführten Tests des Automobilbaus für die Gebrauchstemperaturklasse 125 °C.

Die nachstehende Tabelle 3 enthält die Prüfergebnisse für ein Kabel mit einem Querschnitt AL des Leiters 1 von 0,5 mm².

**Tabelle 3:**

| Testergebnisse (Leiterquerschnitt 0,5 mm²) | | | |
|---|---|---|---|
| Kenngröße | Wert | Einheit | Bemerkung |
| Reißkraft | 11,7 | N/mm² | |
| Bruchdehnung | 380 | % | |
| Flammtest | 10 | s | Verlöschzeit |
| Kältewickeltest (-40 °C) | bestanden | | keine Risse und Durchschläge |
| Abriebfestigkeit | 552 | Zyklen | Soll: 300 |
| Hydrolysebeständigkeit | > 40 | Tage | keine Abweichung vom Ausgangswert |
| Medienbeständigkeiten | > 1000 | h | keine Schädigungen, keine Durchschläge |
| Alterung 125 °C / 3000 h | 0 | Durchschläge | keine Risse und Durchschläge |
| Alterung 150 °C / 240 h | 0 | Durchschläge | keine Risse und Durchschläge |
| Thermische Überlastprüfung 175°C/6h | 0 | Durchschläge | keine Risse und Durchschläge |

Die bereits erwähnte Modifikation der Grundrezepturen bestand in Substitutionen der vorgenannten thermoelastischen Komponente B durch ein Olefin-Copolymer, welches als Comonomere jeweils verschiedene Alkylacrylate enthielt. Im Detail wurden folgende Copolymere eingesetzt:
1. Ein Ethylen-Methylacrylat-Copolymer, für dessen Herstellung ein aminbasierendes Vulkanisationssystem eingesetzt wird. Dieses Elastomer weist eine Nenndichte von 1,03 g/cm³ und eine Mooney-Viskosität (ML 1' + 4' bei 100 °C) nach ASTM D1646 von 12,5 bis 19,0 auf. Wenn es 10 Minuten lang einer Vulkanisation bei 177 °C unterzogen wird besitzt es eine Shore-A-Härte (Durometer) von 68, eine Zugfestigkeit von 15,2 MPa und eine Reißdehnung von 280 %.
2. Ein Ethylen-Butylacrylat-Copolymer mit einem Masseanteil von etwa 7 % des Acrylatmonomers. Das Elastomer weist eine Dichte von 0,924 g/cm³ und einen Schmelzindex von 1,1 g /10 min / 2.16 kg / 190°C nach ISO 1133/ASTM 1238 auf. An dünnen Filmen (40 µm Dicke) wurden folgende charakteristische Werkstoffkenngrößen gemessen: Zugfestigkeit 24/18 MPa (MD/TD), Reißdehnung 200/600 % (MD/TD) - jeweils nach ISO 527-3 bei einer Abzugsgeschwindigkeit von 500 mm/min.

Auch bei Einsatz dieser modifizierten Komponente bestanden die erfindungsgemäßen Kabel - bzw. deren Isolation 2 sämtliche der oben genannten Werkstoffprüfungs-Tests für die Gebrauchstemperaturklasse 125 °C.

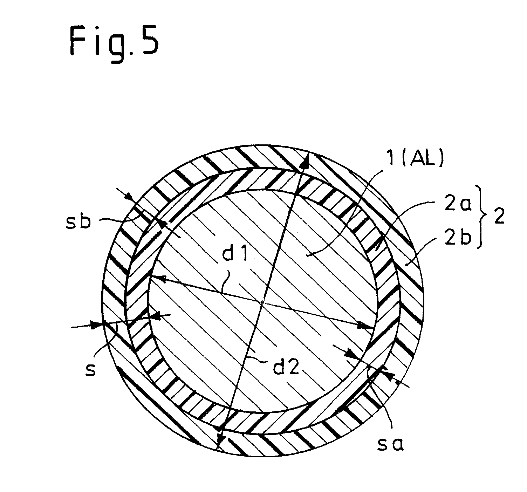

In weiteren, schematisch in Fig. 5 dargestellten Ausführungen ist die Isolation 2 eines erfindungsgemäßen Kabels aus zwei Schichten 2a, 2b aufgebaut.

Dabei werden nachfolgend zwei grundsätzlich mögliche und für unterschiedliche Anwendungsfälle je nach Eignung auswählbare Altemativen beschrieben. In der ersten Alternative kommt für die Außenschicht 2b und in der zweiten Alternative für die Innenschicht 2a der Isolierung 2 eine erfindungsgemäße Kunststoffmischung zur Anwendung, wobei die Zusammensetzung der jeweils anderen Schicht grundsätzlich frei wählbar ist.

In einer ersten Ausführung besaß der Querschnitt AL des Leiters 1 eine Größe von 0,5 mm². Die Dicke sa der inneren Schicht 2a betrug 0,12 mm, die Dicke sb der Außenschicht 2b lag im Bereich zwischen 0,18 und 0,23 mm. Für die Außenschicht 2b der Isolierung 2 kam eine Kunststoffmischung zur Anwendung, deren Zusammensetzung eine solche war, wie sie in der oben aufgeführten Tabelle 2 für den Nennquerschnitt 0,5 mm² angegeben ist.

Die Innenschicht 2a der Isolierung 2 wies folgende Zusammensetzung auf:

| | |
|---|---|
| 86 phr | Polypropylenpolymer oder -copolymer (Komponente A1), |
| 14 phr | thermoelastische Komponente - POE (Komponente B1), |
| 43 phr | Füllstoff - Mg(OH)₂ (Komponente C1), |
| 1,9 phr | Stabilisatoren (Komponente D1). |

Die Prüfkenngrößen des Kabels wiesen gegenüber den in der oben aufgeführten Tabelle 3 angegebenen Werten nur geringfügige Abweichungen auf und erfüllten alle Anforderungen für die Gebrauchstemperaturklasse 125 °C.

Auch für Kabel, deren Leiter 1 einen Querschnitt AL im Bereich von mehr als 6 mm², beispielsweise 8 bis 180 mm², insbesondere im Bereich von 16 bis 95 mm², aufweisen, erscheint eine Dualschichtisolation besonders geeignet. Insbesondere ist eine Eignung für Leiter 1 mit einem Querschnitt AL im Bereich von 4 bis 180 mm², besonders bevorzugt im Bereich von 10 bis 125 mm², gegeben. Die beiden Schichten 2a, 2b der Isolierung 2 können dabei material-, kraft- und/oder formschlüssig, gegebenenfalls unter Einsatz eines Haftvermittlers, miteinander verbunden sein. Die Schichten 2a, 2b der Isolierung 2 können dabei außerdem in einem Arbeitsgang gemeinsam auf den Leiter 1 aufgebracht sein. Zur Bildung der Isolation 2 können bekannte Extrusionslinien eingesetzt werden.

In weiteren, insbesondere für Batterie- und Generatorleitungen von Kraftfahrzeugen getesteten Ausführungen besaß der Querschnitt AL des Leiters 1 eine Größe von jeweils über 8 mm². Die Mindestdicke sa der inneren Schicht 2a betrug dabei jeweils 0,08 mm, die Mindestdicke sb der Außenschicht 2b lag bei 0,05 mm. Bei diesen Ausführungen kamen für die Innenschicht 2a der Isolierung 2 Kunststoffmischungen zur Anwendung, deren Zusammensetzungen solche waren, wie sie in der oben aufgeführten Tabelle 2 angegeben sind. Die äußere Schicht 2b der Isolierung 2 bestand aus einem flammwidrigen, halogenfreien, thermoplastischen Polyetherurethan.

Die Prüfkenngrößen des Kabels wiesen gegenüber den in der oben aufgeführten Tabelle 3 angegebenen Werten ebenfalls nur geringfügige Abweichungen auf und erfüllten zumindest alle Anforderungen für die Gebrauchstemperaturklasse mit der oberen Grenztemperatur von 125 °C (Klasse C), Zusätzlich zu den angegebenen Werten wurde in der äußeren Schicht 2b der Isolierung 2 durchmesserabhängig eine Härte eingestellt, die im Bereich von etwa 75 Shore A bis 72 Shore D, bevorzugt im Bereich von 80 bis 90 Shore A, lag. Die Härte - auch als Maß für die Flexibilität der Isolation 2 - wurde dabei so eingestellt, daß sie bei einem größeren Querschnitt AL des Leiters 1 geringer war als bei einem kleineren Querschnitt AL des Leiters 1.

Die Erfindung beschränkt sich nicht auf die beschriebenen Ausführungsbeispiele, sondern umfaßt auch alle im Sinne der Erfindung gleichwirkenden Ausführungen.

So muß es sich bei der Komponente A (bzw. A1) nicht zwangsläufig um ein heterophasiges PP-Block-Copolymer handeln, sondern die Komponente A (oder A1) könnte auch ein homophasiges PP-Copolymer sein, dessen Monomerbestandteile im Molekül z.B. eine statistische Verteilung aufweisen - oder sie könnte überhaupt ein Homopolymer sein.

Die thermoelastische Komponente B (bzw. B1) könnte optional auch ein Olefin-Copolymer umfassen, bei dem der Alkylrest des Alkylacrylats des/der Comonomer(e) eine Ethylgruppe ist oder sie könnte aus mehreren der genannten Copolymere (als Blend) bestehen. Aus den schon entsprechend den beschriebenen Beispielen unterschiedlichen möglichen Werkstoffeigenschaften dieser Komponente, durch die (z.B. Schmelzpunkt, Schmelzindex, Viskosität) einerseits Produkt-Endeigenschaften (z.B. thermische Beständigkeit) aber andererseits auch Verarbeitungseigenschaften der Mischung beeinflußt werden, geht hervor, daß diese innerhalb nicht zu enger Grenzen ohne Nachteil variiert werden können.

Als Füllstoff (Komponente C bzw. C1) könnte anstelle des gecoateten Magnesiumhydroxyds auch ein un- oder anders gecoatetes Magnesiumhydroxid oder - entsprechend - ein Aluminiumhydroxyd eingesetzt werden. Auch die Komgrößenverteilung des Füllstoffs könnte von der angegebenen differieren.

Des weiteren sind die beispielhaft genannten Grundrezepturen auf elektrische Kabel abgestimmt, bei denen die Leiter 1 aus Kupfer bestehen. Sollte - beispielsweise für ein optisches Kabel - für den Leiter 1 ein Glasfaserwerkstoff eingesetzt werden, so können sich andere optimale Mischungszusammensetzungen ergeben.

Schließlich ist es nicht zwingend nötig, (wie in den Ausführungsbeispielen) die Anteile des flammwidrigen Füllstoffs (Komponente C) auf Kosten der Elastomerkomponente (B) zu verändem, sondern diese Anteile könnten jeweils auch unabhängig voneinander eingestellt werden.

Ebenso erscheint es möglich, die erfindungsgemäße Kunststoffmischung mit einem anderen als dem angegebenen Stabilisatorsystem zu fertigen.

Bei erfindungsgemäßen Kabeln mit zweischichtigem Aufbau der Isolierung 2, bei denen die äußere Schicht 2b erfindungsgemäß ausgebildet ist, kann die innere Schicht 2a (vorteilhafterweise bei gegenüber der Außenschicht 2b auf insbesondere bis etwa ein Viertel reduziertem Füllstoffgehalt) aus einer Kunststoffmischung mit allen Merkmalen bestehen, wie sie für die vorstehend für die erfindungsgemäße Kunststoffmischung beschrieben wurden (z.B. gilt dies für Verarbeitungsadditive E1, die im Ausführungsbeispiel nicht erwähnt sind, oder im Hinblick auf einen leiterabhängigen Rezepturaufbau).

Bei erfindungsgemäßen Kabeln mit zweischichtigem Aufbau der Isolierung 2, bei denen die innere Schicht 2a erfindungsgemäß ausgebildet ist, muß die äußere Schicht 2b nicht aus dem beschriebenen flammwidrigen, halogenfreien Polyetherurethan bestehen, sondern könnte auch aus einem anderen, z.B. einem Polyesterurethan, oder überhaupt aus einem anderen, vorzugsweise halogenfreien und flammwidrigen, Werkstoff bestehen, wie einem thermoplastischen Elastomer auf der Basis von Polyetherestern oder -amiden. Prädestiniert erscheinen dafür - ohne Anspruch auf Vollständigkeit zu erheben - entsprechend der jeweiligen geforderten Gebrauchstemperaturklasse die eingangs genannten Werkstoffe.

Zu ergänzen ist noch, daß es sich für kleinere Leiterquerschnitte, insbesondere bei einem Querschnitt AL des Leiters 1 von etwa 4 bis 6 mm², als günstig erwiesen hat, wenn die Härte der Isolierung 2 - bzw. bei einem mehrschichtigen Aufbau der Isolierung 2 zumindest aber die Härte der äußeren Schicht 2b der Isolierung 2 - etwa im Bereich von 55 bis 72 Shore D lag.

Zu ergänzen ist des Weiteren, daß bei einer Dualschichtisolation der Aufbau der Einzelschichten grundsätzlich nicht an die Größe des Leiterquerschnitts AL gebunden ist.

Ferner ist die Erfindung nicht auf die in den unabhängigen Ansprüchen 1 definierte Merkmalskombination beschränkt, sondem kann auch durch jede beliebige andere Kombination von bestimmten Merkmalen aller insgesamt offenbarten Einzelmerkmale definiert sein. Dies bedeutet, daß jedes Einzelmerkmal des Anspruchs 1 weggelassen bzw. durch mindestens ein an anderer Stelle offenbartes Merkmal ersetzt werden kann. Insofern ist der Anspruch 1 lediglich als ein erster Formulierungsversuch für eine Erfindung zu verstehen.

### Bezugszeichen

- 1: Leiter
- 2: Isolierung
- 2a: innere Schicht von 2
- 2b: äußere Schicht von 2

- AL: Querschnitt von 1
- d1: Durchmesser von 1
- d2: Durchmesser von 2
- s: Wandstärke von 2
- sa: Wandstärke von 2a
- sb: Wandstärke von 2b

## Patentansprüche

1. Recycelbare halogenfrei flammgeschützte Kunststoffmischung, insbesondere für elektrische oder optische Kabel, auf der Basis von Polypropylen und/oder dessen Copolymeren (A), welche einen flammwidrig wirkenden Füllstoff (C) und eine mindestens auf einem Olefin-Copolymer basierende thermoelastische Komponente (B) enthält,
**gekennzeichnet durch** folgende Zusammensetzung:
| | |
|---|---|
| 50 - 95 phr | des Polypropylenpolymers oder -copolymers (A), |
| 5 - 50 phr | der thermoelastischen Komponente (B), |
| 90 - 250 phr | des Füllstoffs (C) |
| 0,1 - 5 phr | eines Stabilisatorsystems (D), |
| 0,5 - 5 phr | Verarbeitungsadditive (E), |
wobei die thermoelastische Komponente als Comonomer(e) des Olefins Octen und/oder mindestens ein Alkylacrylat enthält.

2. Kunststoffmischung nach Anspruch 1,
**dadurch gekennzeichnet, daß** das Polypropylenpolymer oder -copolymer (A) eine Dichte von mehr als 0,8 g/cm³ aufweist.

3. Kunststoffmischung nach Anspruch 1 oder 2,
**dadurch gekennzeichnet, daß** das Polypropylenpolymer oder -copolymer (A) eine Kerbschlagzähigkeit nach ISO 179 / 1eA von mehr als 4 kJ/m² bei 0°C aufweist.

4. Kunststoffmischung nach einem der Ansprüche 1 bis 3,
**dadurch gekennzeichnet, daß** das Polypropylenpolymer oder -copolymer (A) ein Block-Copolymer ist.

5. Kunststoffmischung nach einem der Ansprüche 1 bis 4,
**dadurch gekennzeichnet, daß** das Polypropylenpolymer oder -copolymer (A) ein heterophasiges Polymer ist.

6. Kunststoffmischung nach einem der Ansprüche 1 bis 5,
**dadurch gekennzeichnet, daß** das Polypropylenpolymer oder - copolymer (A) einen Schmelzpunkt nach ISO 3146 von über 160°C aufweist.

7. Kunststoffmischung nach einem der Ansprüche 1 bis 6,
**dadurch gekennzeichnet, daß** das Polypropylenpolymer oder -copolymer (A) einen Schmelzindex von weniger als 3 g / 10 min / 2.16 kg/230°C nach ISO 1133 aufweist.

8. Kunststoffmischung nach einem der Ansprüche 1 bis 7,
**dadurch gekennzeichnet, daß** die thermoelastische Komponente (B) ein oder mehrere Ethylen-Copolymere umfaßt, bei denen der Alkylrest des Alkylacrylats des/der Comonomer(e) des Ethylens eine Ethyl-, Methyl- oder Butylgruppe ist.

9. Kunststoffmischung nach einem der Ansprüche 1 bis 8,
**dadurch gekennzeichnet, daß** der Füllstoff (C) in einer Menge von 170 - 220 phr enthalten ist.

10. Kunststoffmischung nach einem der Ansprüche 1 bis 9,
**dadurch gekennzeichnet, daß** der Füllstoff (C) ein Metallhydroxyd, vorzugsweise Magnesiumhydroxyd oder Aluminiumhydroxyd, ist.

11. Kunststoffmischung nach einem der Ansprüche 1 bis 10,
**dadurch gekennzeichnet, daß** der Füllstoff (C) eine mittlere Teilchengröße (d₅₀) von 0,9 - 2,1 µm, insbesondere von 1,2 - 1, 7 µm, aufweist.

12. Kunststoffmischung nach einem der Ansprüche 1 bis 11,
**dadurch gekennzeichnet, daß** der Füllstoff (C) eine BET-Oberfläche von mehr als 3 m²/g, insbesondere von 4 - 6 m²/g, aufweist.

13. Kunststoffmischung nach einem der Ansprüche 1 bis 12,
**dadurch gekennzeichnet, daß** der Füllstoff (C) eine elektrische Leitfähigkeit von weniger als 155 µS/cm aufweist.

14. Kunststoffmischung nach einem der Ansprüche 1 bis 13,
**dadurch gekennzeichnet, daß** der Füllstoff (C) eine Beschichtung, insbesondere eine Beschichtung mit Amino- oder Vinylsilanen, aufweist.

15. Kunststoffmischung nach einem der Ansprüche 1 bis 14,
**dadurch gekennzeichnet, daß** das eingesetzte Stabilisatorsystem (D) auf einer Mischung aus Thiocarbonsäureestern, einem sterisch gehinderten Phenol und Hydrazid-Metalldesaktivatoren basiert.

16. Kunststoffmischung nach Anspruch 15,
**dadurch gekennzeichnet, daß** die Thiocarbonsäureester, das sterisch gehinderte Phenol und die Hydrazid-Metalldesaktivatoren im Verhältnis 1 : (1,2 - 1,8) : (0,8 - 1,2) in der Mischung des Stabilisatorsystems enthalten sind.

17. Kunststoffmischung nach einem der Ansprüche 1 bis 16,
**dadurch gekennzeichnet, daß** die Verarbeitungsadditive (E) aus Zusätzen bestehen, welche die Extrudierbarkeit erleichtern und vorzugsweise Wachse und/oder andere organische Verbindungen auf der Basis von Amiden, Estern oder Olefinen umfassen.

18. Kunststoffmischung nach einem der Ansprüche 1 bis 17,
**gekennzeichnet durch** einen oder mehrere Farbstoffe als Rezepturbestandteile.

19. Elektrisches oder optisches Kabel, umfassend einen elektrischen oder optischen Leiter (1) und eine recycelbare halogenfrei flammgeschützte Isolierung (2), die aus Kunststoffmischung besteht,
**dadurch gekennzeichnet, daß** die Isolierung (2) zumindest teilweise aus einer Kunststoffmischung besteht, deren Rezepturzusammensetzung die Merkmale eines oder mehrerer der Ansprüche 1 bis 18 aufweist.

20. Kabel nach Anspruch 19,
**dadurch gekennzeichnet, daß** die Isolierung (2) mehrschichtig, insbesondere zweischichtig (2a, 2b), aufgebaut ist.

21. Kabel nach Anspruch 20,
**dadurch gekennzeichnet, daß** die Schichten (2a, 2b) der Isolierung (2) material-, kraft- und/oder formschlüssig, gegebenenfalls unter Einsatz eines Haftvermittlers, miteinander verbunden sind.

22. Kabel nach Anspruch 20 oder 21,
**dadurch gekennzeichnet, daß** die Schichten (2a, 2b) der Isolierung (2) in einem Arbeitsgang gemeinsam auf den Leiter (1) aufgebracht sind.

23. Kabel nach einem der Ansprüche 20 bis 22,
**dadurch gekennzeichnet, daß** der Leiter (1) einen Querschnitt (AL) im Bereich von 4 bis 180 mm², insbesondere im Bereich von 10 bis 125 mm², aufweist.

24. Kabel nach einem der Ansprüche 19 bis 23,
**dadurch gekennzeichnet, daß** die äußere Schicht (2b) einer zumindest zweischichtigen (2a, 2b) Isolierung (2) aus einer Kunststoffmischung besteht, deren Rezepturzusammensetzung die Merkmale eines oder mehrerer der Ansprüche 1 bis 18 aufweist.

25. Kabel nach einem der Ansprüche 19 bis 23,
**dadurch gekennzeichnet, daß** die innere Schicht (2a) einer zumindest zweischichtigen (2a, 2b) Isolierung (2) aus einer Kunststoffmischung besteht, deren Rezepturzusammensetzung die Merkmale eines oder mehrerer der Ansprüche 1 bis 18 aufweist.

26. Kabel nach Anspruch 25,
**dadurch gekennzeichnet, daß** die äußere Schicht (2b) der zumindest zweischichtigen (2a, 2b) Isolierung (2) eine Dicke (sb) von mindestens 0,05 mm aufweist.

27. Kabel nach Anspruch 25 oder 26,
**dadurch gekennzeichnet, daß** die innere Schicht (2a) der zumindest zweischichtigen (2a, 2b) Isolierung (2) eine Dicke (sa) von mindestens 0,08 mm aufweist.

28. Kabel nach einem der Ansprüche 25 bis 27,
**dadurch gekennzeichnet, daß** die äußere Schicht (2b) der zumindest zweischichtigen (2a, 2b) Isolierung (2) aus einem, bevorzugt flammwidrigen und insbesondere halogenfreien, thermoplastischen Elastomer besteht.

29. Kabel nach einem der Ansprüche 25 bis 28,
**dadurch gekennzeichnet, daß** die äußere Schicht (2b) der zumindest zweischichtigen (2a, 2b) Isolierung (2) aus einem Polyurethan, insbesondere einem Polyetherurethan, besteht.

30. Kabel nach einem der Ansprüche 25 bis 29,
**dadurch gekennzeichnet, daß** die äußere Schicht (2b) der zumindest zweischichtigen (2a, 2b) Isolierung (2) eine Härte im Bereich von etwa 75 Shore A bis 72 Shore D, bevorzugt im Bereich von 80 bis 90 Shore A, aufweist.

31. Kabel nach einem der Ansprüche 19 bis 23,
**dadurch gekennzeichnet, daß** bei einem zweischichtigen (2a, 2b) Aufbau der Isolierung (2) die innere Schicht (2a) aus einer Kunststoffmischung mit folgender Zusammensetzung besteht:
| | |
|---|---|
| 50 - 95 phr | eines Polypropylenpolymers oder -copolymers (A1), |
| 5 - 50 phr | einer thermoelastischen Komponente (B1), |
| 22 - 65 phr | eines Füllstoffs (C1) |
| 0,1 - 5 phr | eines Stabilisatorsystems (D1), |
| 0,5 - 5 phr | Verarbeitungsadditive (E1), |

32. Kabel nach einem der Ansprüche 20 bis 31,
**dadurch gekennzeichnet, daß** die Dicke (sb) der äußeren Schicht (2b) der Isolierung (2) mindestens den halben Wert der Wandstärke (s) der gesamten Isolierung (2) aufweist.

33. Kabel nach einem der Ansprüche 19 bis 32,
**dadurch gekennzeichnet, daß** die Härte der lsolierung (2), bei einem mehrschichtigen (2a, 2b) Aufbau der Isolierung (2) zumindest aber die Härte der äußeren Schicht (2b) der Isolierung (2), bei einem größeren Querschnitt (AL) des Leiters (1) geringer ist als bei einem kleineren Querschnitt (AL) des Leiters (1).

34. Kabel nach einem der Ansprüche 19 bis 33,
**dadurch gekennzeichnet, daß** die Härte der lsolierung (2), bei einem mehrschichtigen (2a, 2b) Aufbau der Isolierung (2) zumindest aber die Härte der äußeren Schicht (2b) der Isolierung (2), bei einem Querschnitt (AL) des Leiters (1) von etwa 4 bis 6 mm² etwa im Bereich von 55 bis 72 Shore D liegt.

35. Elektrisches oder optisches Kabel, umfassend einen elektrischen oder optischen Leiter (1) und eine Isolierung (2), die aus einer recycelbaren halogenfrei flammgeschützten Kunststoffmischung, insbesondere aus einer Kunststoffmischung nach dem Oberbegriff des Anspruchs 1, besteht, welche auf der Basis von Polyolefinen, insbesondere von Polypropylen, und/oder deren/dessen Copolymeren (A) hergestellt ist und einen flammwidrig wirkenden Füllstoff (B) enthält,
**dadurch gekennzeichnet, daß** die Zusammensetzung der Rezeptur der Kunststoffmischung auf ausgewählte physikalische und/oder geometrische Eigenschaften des Leiters (1) abgestimmt ist.

36. Kabel nach Anspruch 35,
**dadurch gekennzeichnet, daß** der Anteil des flammwidrig wirkenden Füllstoffs (C) in Abhängigkeit vom Querschnitt (AL) des Leiters (1) eingestellt ist.

37. Kabel nach Anspruch 35 oder 36,
**dadurch gekennzeichnet, daß** der Anteil des flammwidrig wirkenden Füllstoffs (C) bei einem größeren Querschnitt (AL) des Leiters (1) geringer ist als bei einem kleineren Querschnitt (AL) des Leiters (1).

38. Kabel nach einem der Ansprüche 35 bis 37,
**dadurch gekennzeichnet, daß** der Anteil des flammwidrig wirkenden Füllstoffs (C) zwischen einem nicht zu überschreitenden Maximalwert und einem nicht zu unterschreitenden Minimalwert in erster Näherung reziprok proportional zur Größe des Querschnitts (AL) des Leiters (1) eingestellt ist.

39. Kabel nach einem der Ansprüche 35 bis 38,
**dadurch gekennzeichnet, daß** der Anteil der thermoelastischen Komponente (B) in Abhängigkeit vom Querschnitt (AL) des Leiters (1) eingestellt ist.

40. Kabel nach einem der Ansprüche 35 bis 39,
**dadurch gekennzeichnet, daß** der Anteil der thermoelastischen Komponente (B) bei einem größeren Querschnitt (AL) des Leiters (1) höher ist als bei einem kleineren Querschnitt (AL) des Leiters (1).

41. Kabel nach einem der Ansprüche 35 bis 40,
dadurch geken nzeichnet,daßderAnteilderthermoelastischen Komponente (B) zwischen einem nicht zu unterschreitenden Minimalwert und einem nicht zu überschreitenden Maximalwert in erster Näherung proportional zur Größe des Querschnitts (AL) des Leiters (1) eingestellt ist.

42. Kabel nach einem der Ansprüche 35 bis 41,
**gekennzeichnet durch** die Merkmale des Kennzeichens eines oder mehrerer der Ansprüche 1 bis 18.

43. Kabel nach Anspruch 42,
**dadurch gekennzeichnet, daß** der Anteil des flammwidrig wirkenden Füllstoffs (C) bei einem Querschnitt (AL) des Leiters (1) von 0,35 mm² etwa 63 - 67 Prozent der Kunststoffmischung beträgt, die die gesamte bzw. bei zweischichtigem (2a, 2b) Aufbau die äußere Schicht (2b) oder die innere Schicht (2a) der Isolierung (2) bildet.

44. Kabel nach Anspruch 42 oder 43,
**dadurch gekennzeichnet, daß** der Anteil des flammwidrig wirkenden Füllstoffs (C) bei einem Querschnitt des Leiters (1) von 6,0 mm² etwa 44 - 49 Prozent der Kunststoffmischung beträgt, die die gesamte bzw. bei zweischichtigem (2a, 2b) Aufbau die äußere Schicht (2b) oder die innnere Schicht (2a) der Isolierung (2) bildet.

45. Kabel nach einem der Ansprüche 42 bis 44,
**dadurch gekennzeichnet, daß** der Anteil der Komponente (B), die ein oder mehrere Thermoelaste umfaßt, bei einem Querschnitt (AL) des Leiters (1) von 0,35 mm² etwa 1,4 - 2,0 Prozent der Kunststoffmischung beträgt, die die gesamte bzw. bei zweischichtigem (2a, 2b) Aufbau die äußere Schicht (2b) oder die innere Schicht (2a) der Isolierung (2) bildet.

46. Kabel nach einem der Ansprüche 42 bis 45,
**dadurch gekennzeichnet, daß** der Anteil der Komponente (B), die ein oder mehrere Thermoelaste umfaßt, bei einem Querschnitt (AL) des Leiters (1) von 6,0 mm² etwa 24 - 28 Prozent der Kunststoffmischung beträgt, die die gesamte bzw. bei zweischichtigem (2a, 2b) Aufbau die äußere Schicht (2b) oder die innere Schicht (2a) der Isolierung (2) bildet.

47. Kabel nach einem der Ansprüche 42 bis 46,
**dadurch gekennzeichnet, daß** bei dem zweischichtigen (2a, 2b) Aufbau der Isolierung (2) die Zusammensetzung der Rezeptur der Kunststoffmischung, die die innere Schicht (2a) oder die äußere Schicht (2a) bildet, insbesondere die Anteile der thermoelastischen Komponente (B1) und/oder des Füllstoffs (C1), auf ausgewählte physikalische und/oder geometrische Eigenschaften des Leiters (1), wie dessen Querschnitt (AL), abgestimmt ist.
